(19) Europäisches Patentamt / European Patent Office / Office européen des brevets

(11) **EP 4 228 939 B1**

(12) **EUROPÄISCHE PATENTSCHRIFT**

(45) Veröffentlichungstag und Bekanntmachung des Hinweises auf die Patenterteilung:
**29.10.2025 Patentblatt 2025/44**

(21) Anmeldenummer: **21755731.3**

(22) Anmeldetag: **03.08.2021**

(51) Internationale Patentklassifikation (IPC):
*B60T 8/174* *(2006.01)*    *B60T 8/175* *(2006.01)*

(52) Gemeinsame Patentklassifikation (CPC):
**B60T 8/174; B60T 8/175**

(86) Internationale Anmeldenummer:
**PCT/EP2021/071602**

(87) Internationale Veröffentlichungsnummer:
**WO 2022/078649 (21.04.2022 Gazette 2022/16)**

(54) **VERFAHREN ZUR STEUERUNG EINES DREHMOMENTS ZUMINDEST EINES RADES**

METHOD FOR CONTROLLING A TORQUE OF AT LEAST ONE WHEEL

PROCÉDÉ DE RÉGLAGE D'UN COUPLE D'AU MOINS UNE ROUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2020 DE 102020212946**

(43) Veröffentlichungstag der Anmeldung:
**23.08.2023 Patentblatt 2023/34**

(73) Patentinhaber: **Robert Bosch GmbH
70442 Stuttgart (DE)**

(72) Erfinder:
• **WEIDMANN, Dirk
74321 Bietigheim-Bissingen (DE)**
• **ERDEN, Michael
74321 Bietigheim-Bissingen (DE)**
• **SCHARBAK, Rami
71726 Benningen (DE)**
• **STUMM, Marco
71636 Ludwigsburg (DE)**
• **HOFFMANN, Kai
74360 Ilsfeld (DE)**
• **LOEFFELMANN, Valentin
69234 Dielheim (DE)**

(56) Entgegenhaltungen:
EP-A2- 0 985 586    CN-A- 103 558 764
CN-A- 111 211 724    DE-A1- 102004 030 782
DE-A1- 102018 112 718    DE-A1- 19 527 323

**Beschreibung**

Stand der Technik

Mittels Fahrdynamikregelsystemen werden Fahrzustände von Fahrzeugen abhängig von einem aktuellen Schlupf zwischen einem Rad und der Fahrbahn beeinflusst, um beispielsweise eine möglichst gute Kraftübertragung zwischen dem Rad und einer Fahrbahn oder eine Stabilisierung des Fahrzustands zu erreichen.

Dabei greifen die Fahrdynamikregelsysteme beispielsweise durch eine Veränderung eines Bremsdrucks oder eines Motormoments in die Fahrdynamik des Fahrzeugs ein. Solche Stelleingriffe können mittels eines elektronischen Stabilisierungsprogramms (ESP), einer Bremsschlupfregelung (ABS) oder einer Antriebsschlupfregelung (ASR) bewirkt werden.

Solche Fahrdynamikregelsysteme müssen für jeden neuen Fahrzeugtyp entsprechend spezifischen Anforderungen an Komfort und Bremsverhalten aufwendig kalibriert werden, wobei auch unterschiedliche Fahrbahnzustände zu berücksichtigen sind.

Aus EP 0 985 586 A1 ist ein Antiblockiersystem auf der Basis eines Fuzzy-Reglers bekannt.

Die Verwendung von Radiale-Basisfunktionen-Netzwerken im Rahmen einer Fahrzeugsteuerung ist aus DE 10 2018 112718 A1, DE 195 27 323 A1, CN 103 558 764 A oder CN 111 211 724 A bereits bekannt.

Offenbarung der Erfindung

Die vorliegende Erfindung offenbart ein Verfahren zur Steuerung eines Drehmoments zumindest eines Rades einer mobilen Plattform, ein Verfahren zum Trainieren eines Radiale-Basisfunktionen-Netzwerks zur Schätzung eine Drehmomentänderung, eine Verwendung des Verfahrens zur Kalibrierung, eine Steuervorrichtung, ein Computerprogramm und eine Verwendung der Steuervorrichtung, gemäß den Merkmalen der unabhängigen Ansprüche, die die oben genannten Aufgaben zumindest zum Teil lösen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist.

Der Fachmann wird aber erkennen, dass Änderungen im Rahmen des beanspruchten Gegenstands möglich sind.

Gemäß einem Aspekt wird ein Verfahren zur Steuerung eines Drehmoments zumindest eines Rades einer mobilen Plattform, mit den folgenden Schritten vorgeschlagen:

In einem Schritt wird zumindest ein aktueller Schlupfwert des Rades und zumindest eine aktuelle Radbeschleunigung des Rades als Eingangswerte bereitgestellt. In einem weiteren Schritt wird ein trainiertes Radiale-Basisfunktionen-Netzwerk bereitgestellt, das eingerichtet ist, mittels der Eingangswerte zumindest eine Drehmomentänderung als Ausgangswert für die Steuerung des zumindest einen Rades zu bestimmen. In einem weiteren Schritt wird eine aktuelle Drehmomentänderung mittels des trainierten Radiale-Basisfunktionen-Netzwerks und den bereitgestellten Eingangswerten, zur Steuerung des Drehmoments, bestimmt.

Ein Radiale-Basisfunktionen-Netzwerk (RBF-Netzwerk (engl.: Radial Base Function)) ist ein spezielles, geschichtetes, künstliches neuronales Netzwerk, das nichtlineare radiale Basisfunktionen als Aktivierungsfunktionen verwendet und eine Eingabe- und eine Ausgabeschicht und eine Schicht von verborgenen Neuronen mit der RBF-Aktivierungsfunktion aufweist. Dabei kann die nichtlineare RBF-Aktivierungsfunktion, die nur von der Entfernung von einem Mittelvektor abhängt, radialsymmetrisch um diesen Vektor sein. D. h., dass die radiale Basisfunktion nur von dem Abstand zu einem vorgegebenen Zentrum abhängt. Eingangswerte für das RBF-Netzwerk können beispielsweise als Vektor reeller Zahlen modelliert werden. Die Ausgabe des RBF-Netzwerks ist typischerweise eine lineare und/oder sigmoide Kombination von radialen Basisfunktionen der Eingaben und Neuronenparametern (Gewichten w).

Die verborgene Schicht kann eine Anzahl von Neuronen aufweisen mit jeweils einem zentralen Vektor für jedes Neuron. Die lineare Ausgangsschicht kann ein Ausgangsneuron aufweisen, mit dem die Neuronen jeweils über ein Gewicht w funktional verbunden sind. Typischerweise sind alle Eingänge mit jedem versteckten Neuron verbunden. Die Norm für die Entfernung eines Eingangswertes vom jeweiligen zentralen Vektor kann als euklidischer und/oder quadratischer Abstand und/oder als L0 Norm und/oder als L1 Norm und/oder als L2 Norm definiert sein und die radiale Basisfunktion, die mit einer beliebigen Funktion, wie beispielsweise einer linearen, einer sigmoiden Funktion oder einer quadratischen Funktion definiert werden kann, kann insbesondere als Gaußsche Verteilungsfunktion definiert werden und hängt entsprechend nur von dem Abstand zu dem vorgegebenen Zentrum der Neuronen ab. RBF-Netzwerke können durch Fehlerrückmeldungsverfahren bzw. Gradientenverfahren trainiert werden.

Eine Radbeschleunigung des Rades entspricht einer Winkelbeschleunigung des Rades, bzw. einer Beschleunigung eines Punktes an einem Umfang des Rades.

Die Drehmomentänderung ist dabei eine Änderung des Drehmoments, das bremsend, entsprechend einem Bremsmoment, auf das zumindest eine Rad einwirkt, und/oder eine Änderung des Drehmoments das, entsprechend einem Motormoment, beschleunigend auf das zumindest eine Rad einwirkt.

Dabei ist das Merkmal der Steuerung breit auszulegen und umfasst sowohl eine Steuerung im engeren Sinne als auch eine Regelung des Drehmoments des zumindest einen Rades der mobilen Plattform.

Mit diesem vorgeschlagenen Verfahren kann beispielsweise eine Kalibrierung eines Bremsreglers vereinfacht und automatisiert werden, wobei das Verfahren durch die Verwendung des trainierten Radiale-Basisfunktionen-Netzwerks, im Gegensatz zu einem tiefen neuronalen Netz, nachvollziehbare Bestimmungen der aktuellen Drehmomentänderung bereitstellt.

Insbesondere kann das Verfahren auch auf andere komplexe Regler adaptiert werden, so dass eine "time to market" verkürzt werden kann.

Dadurch, dass bei diesem Verfahren eine aktuelle Änderung des Drehmoments mit dem trainierten Radiale-Basisfunktionen-Netzwerk bestimmt wird, wird vorteilhafterweise erreicht, dass von dem Radiale-Basisfunktionen-Netzwerk ein absolut kleinerer Wert für die Änderung des Drehmoments bestimmt bzw. geschätzt werden muss, wodurch eine genauere Bestimmung der Drehmomentänderung ermöglicht wird. Darüber hinaus kann mit der bestimmten aktuellen Drehmomentänderung eine stabilere Steuerung des Drehmoments erreicht werden, da insbesondere instabile Bestimmungen leichter identifiziert und gefiltert werden können.

Vorteilhafterweise kann das vorgeschlagene Verfahren beispielsweise für eine Schlupfregelung mit einem Antiblockiersystem verwendet werden. Alternativ oder zusätzlich kann das vorgeschlagene Verfahren für eine Schlupfregelung in einem Traktionskontroll-System (TCS) verwendet werden.

Vorteilhafterweise kann durch das Bestimmen der aktuellen Drehmomentänderung mittels des trainierten Radiale-Basisfunktionen-Netzwerks eine robuste und nachvollziehbare Steuerung des Drehmoments des zumindest einen Rades der mobilen Plattform bereitgestellt werden, denn das trainierte Radiale-Basisfunktionen-Netzwerk kann aufgrund der einfachen Struktur in Bezug auf die funktionalen Zusammenhänge analysiert werden.

Insbesondere ermöglicht die Verwendung eines Radiale-Basisfunktionen-Netzwerks zur Bestimmung einer aktuellen Drehmomentänderung eine Aufteilung eines Zustandsraums in mehrere Bereiche, entsprechend der praktischen Anwendung einer Steuerung eines Drehmoments des Rades auf unterschiedlichen Untergründen und ermöglicht so eine nachvollziehbare Zustands-Aktions-Zuordnung, da somit ein nichtlinearer Zusammenhang transparent dargestellt werden kann. Weiterhin kann durch die Verwendung einer RBF-Architektur für das Verfahren eine Anpassung und Erweiterung mit verschiedenen Parametern und anderen Eingangsgrößen auf fast jedes Regelungsproblem angewendet werden und ist so besonders flexibel.

Darüber hinaus weist ein Radiale-Basisfunktionen-Netzwerk günstige statistische Eigenschaften auf, um das Drehmoment zu steuern.

Gemäß einem Aspekt wird vorgeschlagen, dass das oben beschriebene Verfahren ein aktuelles Drehmoment bestimmt, indem die bestimmte Drehmomentänderung zu einem aktuellen Drehmoment des Rades addiert wird.

Gemäß einem Aspekt wird vorgeschlagen, dass das oben beschriebene Verfahren einen Bremsdruck und/oder eine Bremsdruck-Änderung bestimmt, indem das bestimmte Drehmoment und/oder die bestimmte Drehmomentänderung jeweils mittels eines funktionalen Zusammenhangs zwischen dem Drehmoment und dem Bremsdruck berechnet wird.

Gemäß der Erfindung wird vorgeschlagen, dass die bereitgestellten Eingangswerte für das trainierte Radiale-Basisfunktionen-Netzwerk zusätzlich eine erste Sequenz vorheriger Werte einer Normalkraft des Rades und eine zweite Sequenz vorheriger Drehmomentwerte aufweisen, um die aktuelle Drehmomentänderung zu bestimmen. Die Verwendung weiterer Eingangswert-Typen ermöglicht eine verbesserte Bestimmung der aktuellen Drehmomentänderung.

Gemäß einem Aspekt wird vorgeschlagen, dass die bereitgestellten Eingangswerte für das trainierte Radiale-Basisfunktionen-Netzwerk aus dem aktuellen Schlupfwert des Rades und der aktuellen Radbeschleunigung des Rades und einer ersten Sequenz vorheriger Werte einer Normalkraft des Rades und einer zweiten Sequenz vorheriger Drehmomentwerte bestehen, und wobei und die aktuelle Drehmomentänderung mittels eines mit diesen vier Eingangswert-Typen trainierten Radiale-Basisfunktionen-Netzwerks bestimmt wird.

Vorteilhafterweise kann mit diesen vier Eingangswert-Typen ein Gesamtzustand der mobilen Plattform besonders gut charakterisiert werden, um insbesondere die Steuerung des Drehmoments auf unterschiedlichen Untergründen und Umfeld-Bedingungen, und resultierenden unterschiedlichen Reibwerten und Normalkräften mit einem entsprechenden Training des Radiale-Basisfunktionen-Netzwerks mit diesen vier Eingangswert-Typen, anzupassen. Mit diesen vier Eingangswert-Typen können unterschiedliche Fahrszenarien im Zustandsraum des Radiale-Basisfunktionen-Netzwerks abgebildet werden und ermöglichen so eine verständliche Zustand-Aktions-Zuordnung, um eine entsprechend korrekte aktuelle Drehmomentänderung mit dem vorgeschlagenen Verfahren zu bestimmen. Somit kann ein nicht linearer Zusammenhang transparent dargestellt werden.

Dabei kann die erste Sequenz und die zweite Sequenz vorheriger Werte die entsprechenden Werte der Eingangswert-Typen über letzte, bzw. vergangene Zeitschritte betreffen, und insbesondere über letzte n Zeitschritte gefiltert werden, um die Steuerung des Drehmoments robuster und stabiler zu machen.

Gemäß einem Aspekt wird vorgeschlagen, dass die Eingangswerte einen aktuellen Reibungskoeffizienten des Rades; und/oder ein aktuelles Drehmoment des Rades; und/oder einen laufenden Mittelwert des Drehmoments des Rades; und/oder eine aktuelle zeitliche Änderung des Drehmoments und/oder einen Gradienten des Drehmoments des Rades; und/oder eines Mittelwerts des Drehmoments des Rades; und/oder ein aktuelles Drehmoment zumindest eines anderen Rades der mobilen Plattform; und/oder eine Normalkraft zumindest des Rades und/oder eine Normalkraft zumindest eines anderen Rades der Plattform; und/oder eine Differenz zwischen dem aktuellen Schlupf und einem Soll-Schlupf; und/oder Dynamikwerte der mobilen Plattform und/oder eine aktuelle zeitliche Änderung der Radbeschleunigung und/oder eine Normalkraft zumindest eines anderen Rades der mobilen Plattform und/oder einen aktuellen Schlupfwert und zumindest eine aktuelle Radbeschleunigung eines anderen Rades der Plattform, aufweisen.

Dabei kann die Dynamik der mobilen Plattform mit einer Gierrate der mobilen Plattform und/oder einer Beschleunigung der mobilen Plattform und/ oder einem Lenkwinkel der mobilen Plattform charakterisiert werden.

Gemäß einem Aspekt wird vorgeschlagen, dass das bereitgestellte trainierte Radiale-Basisfunktionen-Netzwerk eingerichtet ist, mittels der Eingangswerte zusätzlich eine Änderung des Motormoments als Ausgangswert für die Steuerung des Drehmoments des zumindest einen Rades zu bestimmen; und das trainierte Radiale-Basisfunktionen-Netzwerk zusätzlich eine Änderung des Motormoments als Ausgangswert für die Steuerung des Drehmoments des zumindest einen Rades bestimmt.

Durch eine Steuerung bzw. Regelung sowohl eines antreibenden als auch eines bremsenden Drehmoments mittels eines Motormoments und/oder eines Bremsmoments kann ein dynamisches Verhalten und/oder eine Traktion der mobilen Plattform in Grenzen beeinflusst werden und sowohl ein optimiertes Bremsverhalten als auch Komfortansprüche an ein Lenkverhalten und/oder ein Bremsverhalten für die Steuerung bzw. Regelung berücksichtigt werden.

Diese Steuerung der Drehmomentänderung sowohl in Bezug auf ein bremsendes Moment als auch ein treibendes Moment gilt insbesondere auch für die Steuerung bzw. Regelung des Drehmoments mit den oben beschriebenen ausschließlichen vier Eingangswert-Typen als Eingangsgrößen.

Es wird ein Verfahren zum Trainieren eines Radiale-Basisfunktionen-Netzwerks zur Schätzung eine Drehmomentänderung zumindest eines Rades einer mobilen Plattform, mit den folgenden Schritten vorgeschlagen:
In einem Schritt wird ein Schlupfwert des Rades bereitgestellt. In einem weiteren Schritt wird eine zu dem Schlupfwert zugehörige Radbeschleunigung des Rades bereitgestellt. In einem weiteren Schritt werden Eingangswerte für das Radiale-Basisfunktionen-Netzwerk mit dem Schlupfwert und der jeweils zugehörigen Radbeschleunigung gebildet. Die bereitgestellten Eingangswerte für das Trainieren des Radiale-Basisfunktionen-Netzwerks weisen zusätzlich eine erste Sequenz vorheriger Werte einer Normalkraft des Rades und eine zweite Sequenz vorheriger Drehmomentwerte auf. In einem weiteren Schritt wird eine zu dem Eingangswerten zugehörige Soll-Drehmomentänderung bereitgestellt und zugeordnet. In einem weiteren Schritt wird das Radiale-Basisfunktionen-Netzwerk mit einer Vielzahl von unterschiedlichen Eingangswerten und den jeweils zugeordneten Soll-Drehmomentänderungen, zur Schätzung der Drehmomentänderung mittels der Eingangswerte, trainiert.

Dieses Verfahren zum Trainieren des Radiale-Basisfunktionen-Netzwerks kann online, mittels der entsprechend eingerichteten mobilen Plattform, und/oder offline auf entsprechend eingerichteten Trainings-Einrichtungen, wie beispielsweise Bremsständen, durchgeführt werden. Bei einem Onlinetraining kann die Steuerung des Drehmoments dann auch an veränderte Bedingungen wie Beladung oder veränderte Reifen angepasst werden.

Bei dem Verfahren zum Trainieren kann eine Soll-Drehmomentänderung heuristisch mit Regeln bestimmt werden, indem gespeicherte gemessene Eingangswerte und gesteuerte Drehmomentänderungen, beispielsweise aus Messungen an einem Bremsstand, bewertet werden. Bei Abweichungen von einer als optimal bewerteten Drehmomentänderung, entsprechend einer Soll-Drehmomentänderung, können Parameter des Radiale-Basisfunktionen-Netzwerks mittels eines Gradientenabstiegs-Verfahrens (engl.: gradient descent) adaptiert werden.

Beispielsweise kann bei dem Verfahren zum Trainieren die von dem Radiale-Basisfunktionen-Netzwerk geschätzte Drehmomentänderung heuristisch bewertet werden, indem beispielsweise in einem ersten Schritt ein mittlerer Bremsschlupf si über ein Intervall mit den Zeitschritten t bis t+n bestimmt wird. In einem weiteren Schritt kann der mittlere Bremsschlupf si mit einem Sollschlupf $sl_{soll}$ verglichen werden.

In einem weiteren Schritt kann eine verbesserte Drehmomentänderung a*, als Soll-Drehmomentänderung, in einem Zeitschritt t-m mittels der ,

$$\text{Formel 1:} \qquad a^* = (a_{slsoll} - a_{sl}) * alpha \qquad ,$$

berechnet werden, wobei a die tatsächlich vorgeschlagene Drehmomentänderung und alpha ein heuristischer Faktor ist.

In einem weiteren Schritt kann ein Update von Parametern des Radiale-Basisfunktionen-Netzwerks, wie beispielsweise der Gewichte w im Zeitschritt t-m mittels einer Gradientenabstiegmethode und einem Fehler $(a^*-a)^2$ durchgeführt werden.

Durch die Verwendung eines gemittelten Bremsschlupfs kann bei diesem Verfahren eine inhärente Systemverzögerung beim Training berücksichtigt werden. Alternativ oder zusätzlich kann dazu der Bremsschlupf mittels eines Savitzky-Golay-Filters bewertet werden. Alternativ oder zusätzlich kann eine solche inhärente Systemverzögerung auch explizit mittels eines Zeitverschiebungsfensters berücksichtigt werden.

Für die Bewertung der geschätzten Drehmomentänderung kann auch die erste oder zweite zeitliche Ableitung des Sollschlupfs herangezogen werden, um mittels einer angepassten Formel 1 eine Soll-Drehmomentänderung zu bestimmen. Somit kann aus dem Intervall mit den Zeitschritten t bis t +n abgeleitet werden, mit welchem Gradienten der Schlupf sich ändert.

Alternativ oder zusätzlich kann die von dem Radiale-Basisfunktionen-Netzwerk vorgeschlagene Drehmomentänderung auch mit den anderen Eingangswert-Typen des Radiale-Basisfunktionen-Netzwerks und deren zeitlicher Änderung entsprechend der oberen Darstellung bewertet werden.

Gemäß einem Aspekt wird vorgeschlagen, dass das Verfahren zum Trainieren des Radiale-Basisfunktionen-Netzwerks online, mittels eines entsprechend eingerichteten Steuergeräts der mobilen Plattform, durchgeführt werden.

Durch ein online durchgeführtes Training des Radiale-Basisfunktionen-Netzwerks kann ein Drehmomentregler der mobilen Plattform schneller trainiert werden und/oder es können auch Änderung der Umgebung und/oder des Rades, wie beispielsweise nach einem Radwechsel, in das Training einbezogen werden.

Gemäß einem Aspekt wird vorgeschlagen, dass das Verfahren zum Trainieren des Radiale-Basisfunktionen-Netzwerks online, während eines Bremsvorgangs, durchgeführt wird.

Mit anderen Worten, dass während eines Bremsvorgangs Parameter des Radiale-Basisfunktionen-Netzwerks während eines aktuell andauernden Bremsvorgangs adaptiert werden, um das Radiale-Basisfunktionen-Netzwerk zu trainieren.

Gemäß einem Aspekt wird vorgeschlagen, dass das Verfahren zum Trainieren des Radiale-Basisfunktionen-Netzwerks offline mittels gespeicherter Messreihen aus Eingangswerten und Ausgangswerten, wie insbesondere Drehmomentänderungen an dem zumindest einen Rad, durchgeführt werden. Dabei können auch andere dynamische Kennzahlen der mobilen Plattform gespeichert und für das Offline-Training herangezogen werden. Vorteilhafterweise kann mit dem Offline-Training eine größere Rechenleistung zur Optimierung des Radiale-Basisfunktionen-Netzwerks verwendet werden.

Gemäß einem Aspekt wird vorgeschlagen, dass die bereitgestellten Eingangswerte für das Trainieren des Radiale-Basisfunktionen-Netzwerks aus dem aktuellen Schlupfwert des Rades und der aktuellen Radbeschleunigung des Rades und einer ersten Sequenz vorheriger Werte einer Normalkraft des Rades und einer zweiten Sequenz vorheriger Drehmomentwerte bestehen.

Gemäß einem Aspekt wird vorgeschlagen, dass den jeweiligen Eingangswerten zusätzlich eine zugehörige Soll-Änderung des Motormoments zugeordnet wird; und das Radiale-Basisfunktionen-Netzwerk mit einer Vielzahl von unterschiedlichen Eingangswerten und jeweils zugeordneten Soll-Drehmomentänderungen und zugeordneten Soll-Änderung des Motormoments trainiert wird.

Gemäß einem Aspekt wird vorgeschlagen, dass dem Radiale-Basisfunktionen-Netzwerk zumindest ein Teil der oben beschriebenen unterschiedlichen Typen von Eingangswerten bereitgestellt wird und das Radiale-Basisfunktionen-Netzwerk mit einer Vielzahl dieser Eingangswerte und den jeweils zugeordneten Soll-Drehmomentänderungen und/oder Soll-Änderung der Motormomente trainiert wird, um die Drehmomentänderung und/oder die Änderung des Motormoments zu schätzen. Gemäß einem Aspekt wird vorgeschlagen, dass das Radiale-Basisfunktionen-Netzwerk basierend auf Expertenwissen und/oder physikalischen Grenzwerten vor dem Training konfiguriert wird, um ein verbessertes Training zu erreichen.

Neben der Möglichkeit das Radiale-Basisfunktionen-Netzwerk für das Training mit zufälligen Werten zu konfigurieren und/oder die Lage der Neuronen gleichmäßig festzulegen, kann mit Expertenwissen das Radiale-Basisfunktionen-Netzwerk so festgelegt werden, dass es weniger trainiert werden muss und/oder bessere Schätzung generieren kann.

Expertenwissen kann insbesondere in Bezug auf die Anzahl und Verteilung der Lage der Neuronen einfließen, in dem die Lage der Neuronen abhängig von physikalischen Limitierungen von jeweiligen Eingangswerten und einer gewünschten Granularität, entsprechend einer gewünschten Genauigkeit der Schätzung, gewählt wird. Dabei kann insbesondere die Lage der Neuronen ungleichmäßig innerhalb der Limitierungen gewählt werden. Insbesondere kann dabei berücksichtigt werden, ob ein Bremsen des Drehmoments oder/und ein treibendes Drehmoment gesteuert werden soll.

Gemäß einem Aspekt wird vorgeschlagen, dass das Radiale-Basisfunktionen-Netzwerk basierend auf Expertenwissen mittels einer Anordnung von Zentren des Radiale-Basisfunktionen-Netzwerks in einem Zustandsraum und/oder mittels einer Gewichtung einer Mehrzahl von Zentren des Radiale-Basisfunktionen-Netzwerks konfiguriert wird.

Es wird ein Verfahren vorgeschlagen, bei dem, basierend auf dem, mit einem der oben beschriebenen Verfahren, bestimmten Drehmoment und/oder Motormoment, ein Steuersignal zur Ansteuerung eines zumindest teilautomatisierten Fahrzeugs bereitgestellt wird; und/oder basierend auf dem bestimmten Drehmoment und/oder dem Motormoment, ein Warnsignal zur Warnung eines Fahrzeuginsassen bereitgestellt wird.

Damit kann beispielsweise eine Steuervorrichtung einer mobilen Plattform ein bremsendes Drehmoment, bzw. eine Bremskraft, an zumindest einem Rad steuern, um die mobile Plattform zu bremsen, indem das Steuersignal an einen Brems-Aktuator, der auf das zumindest eine Rad einwirken kann, weitergeleitet wird.

Der Begriff "basierend auf" ist in Bezug auf das Merkmal, dass ein Steuersignal basierend auf einem bestimmten Drehmoment und/oder Motormoment bereitgestellt wird, breit zu verstehen. Es ist so zu verstehen, dass das bestimmte Drehmoment und/oder Motormoment für jedwede Bestimmung oder Berechnung eines Steuersignals herangezogen wird, wobei das nicht ausschließt, dass auch noch andere Eingangsgrößen für diese Bestimmung des Steuersignals herangezogen werden. Entsprechendes gilt entsprechend für die Bereitstellung des Warnsignals.

Es wird eine Verwendung eines der oben beschriebenen Verfahren zur Kalibrierung eines Drehmomentreglers einer mobilen Plattform vorgeschlagen. Dabei umfasst der Drehmomentregler einen Regler eines Bremsmomentes und/oder eines Motormoments.

Es wird eine Steuervorrichtung und/oder Computerprogramm vorgeschlagen, die/das eingerichtet ist, eines der oben beschriebenen Verfahren, durchzuführen.

Mit einer solchen Vorrichtung kann das entsprechende Verfahren leicht in unterschiedliche Systeme integriert werden.

Es wird eine Verwendung der oben beschriebenen Steuervorrichtung zur Traktionskontrolle zumindest eines Rades der mobilen Plattform vorgeschlagen.

Gemäß einem weiteren Aspekt wird ein Computerprogramm angegeben, das Befehle umfasst, die bei der Ausführung des Computerprogramms durch einen Computer diesen veranlassen, eines der oben beschriebenen Verfahren auszuführen. Ein solches Computerprogramm ermöglicht den Einsatz des beschriebenen Verfahrens in unterschiedlichen Systemen.

Es kann ein maschinenlesbares Speichermedium angegeben werden, auf dem das oben beschriebene Computerprogramm gespeichert ist.

Eine mobile Plattform kann ein zumindest teilweise automatisiertes System sein, das mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme. Weitere Beispiele für mobile Plattformen können Fahrerassistenzsysteme mit mehreren Sensoren, mobile Multisensor-Roboter wie z.B. Roboterstaubsauger oder Rasenmäher, ein MultisensorÜberwachungssystem, ein Schiff, ein Flugzeug, eine Fertigungsmaschine, ein persönlicher Assistent oder ein Zugangskontrollsystem sein. Jedes dieser Systeme kann ein vollständig oder teilweise autonomes System sein.

Ausführungsbeispiele

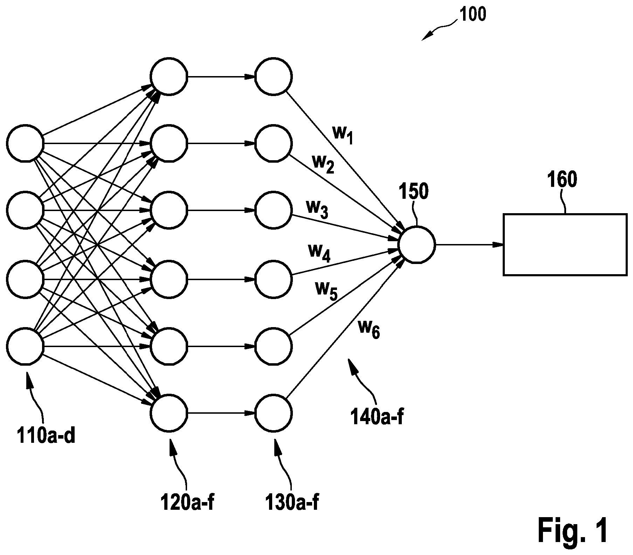

Ausführungsbeispiele der Erfindung werden mit Bezug auf die Figur 1 dargestellt und im Folgenden näher erläutert. Es zeigt:

Figur 1      eine Struktur eines Radiale-Basisfunktionen-Netzwerks.

Die Figur 1 skizziert schematisch eine Struktur eines Radiale-Basisfunktionen-Netzwerks 100 mit einer Eingabeschicht 110a-d, einer Schicht von verborgenen Neuronen 120a-f und einer RBF-Aktivierungsfunktion bzw. Transferfunktion 130a-f und einer Ausgabeschicht 150. Dabei tragen die unterschiedlichen Neuronen 120a-f zur Ausgabeschicht 150 entsprechend den Gewichten w1 bis w6 140a-f bei.

Ein solches Radiale-Basisfunktionen-Netzwerk 100 kann zur Steuerung eines Drehmoments verwendet werden indem das Radiale-Basisfunktionen-Netzwerk 100 mit Eingangswerten eine Drehmomentänderung 160 schätzt.

Zur Steuerung eines Drehmoments zumindest eines Rades einer mobilen Plattform, kann an die Eingabeschicht 110a-d des trainierten Radiale-Basisfunktionen-Netzwerks 100 ein aktueller Schlupfwert des Rades und eine aktuelle Radbeschleunigung des Rades und eine ersten Sequenz vorheriger Werte einer Normalkraft des Rades und eine zweite Sequenz vorheriger Drehmomentwerte als Eingangswerte angelegt werden. Das mit den Eingangswerten 110a-d trainierte Radiale-Basisfunktionen-Netzwerk 100 schätzt mittels der angelegten Eingangswerte eine aktuelle Drehmomentänderung 160 zur Steuerung des Drehmoments.

Dazu werden in einem Schritt alle Eingangswerte 110a-d auf einen Bereich von Null bis Eins normiert.

In einem weiteren Schritt erfolgt eine Berechnung des Abstands zwischen den Signalen der Eingangswerte und den Neuronen, wobei jedes Neuron einen bestimmten Punkt in einem Zustandsraum repräsentiert. Für die Bestimmung des Abstands wird eine euklidische Abstandsmetrik verwendet. Alternativ oder zusätzlich können auch andere Abstandsmetriken, wie beispielsweise eine l1-Abstandsmetrik angewendet werden. Dabei ist der Ausgang jedes Neurons ein Abstand zwischen einem aktuellen Zustand, nämlich dem aktuellen Eingangs-Signal zur Zeit t, und dem spezifischen Zentrum des Neurons.

In einem weiteren Schritt wird der Abstand mittels der radialen Basisfunktion f an die Ausgangsschicht 160 übertragen. Diese radiale Basisfunktion f kann eine beliebige Funktion sein. Beispielsweise kann die radiale Basisfunktion eine Gaußsche Verteilungsfunktion sein, die einen hohen Wert zurückgibt, wenn die Eingabe nahe Null ist, und einen niedrigen Wert, wenn die Eingabe hoch ist. Die Eingabe ist in diesem Fall der Abstand zum Zentrum. D.h. ein Output jedes Neurons wird mit der radialen Basisfunktion transformiert, und entsprechend einer lineare Regression, mit einem spezifischen Gewicht $w_n$ 140a-f multipliziert und aufsummiert, um die Drehmomentänderung 160 zu schätzen.

## Patentansprüche

1.  Verfahren zur Steuerung eines Drehmoments zumindest eines Rades einer mobilen Plattform, mit den Schritten:

    Bereitstellen von zumindest einem aktuellen Schlupfwert des Rades und zumindest einer aktuellen Radbeschleunigung des Rades; und
    einer ersten Sequenz vorheriger Werte einer Normalkraft des Rades und einer zweiten Sequenz vorheriger Drehmomentwerte als Eingangswerte (110a-d);
    Bereitstellen eines trainierten Radiale-Basisfunktionen-Netzwerks (100), das eingerichtet ist, mittels der Eingangswerte (110a-d) zumindest eine Drehmomentänderung als Ausgangswert (160) für die Steuerung des zumindest einen Rades zu bestimmen; und
    Bestimmen einer aktuellen Drehmomentänderung mittels des trainierten Radiale-Basisfunktionen-Netzwerks (100) und den bereitgestellten Eingangswerten, zur Steuerung des Drehmoments.

2.  Verfahren gemäß Anspruch 1, wobei die bereitgestellten Eingangswerte (110a-d) für das trainierten Radiale-Basisfunktionen-Netzwerk (100) aus dem aktuellen Schlupfwert des Rades und der aktuellen Radbeschleunigung des Rades und einer ersten Sequenz vorheriger Werte einer Normalkraft des Rades und einer zweiten Sequenz vorheriger Drehmomentwerte bestehen, und wobei und die aktuelle Drehmomentänderung mittels eines mit diesen vier Eingangswert-Typen trainierten Radiale-Basisfunktionen-Netzwerks (100) bestimmt wird.

3.  Verfahren gemäß Anspruch 1, wobei die Eingangswerte (110a-d) einen aktuellen Reibungskoeffizienten des Rades; und/oder ein aktuelles Drehmoment des Rades; und/oder einen laufenden Mittelwert des Drehmoments des Rades; und/oder eine aktuelle zeitliche Änderung des Drehmoments und/oder einen Gradienten des Drehmoments des Rades; und/oder eines Mittelwerts des Drehmoments des Rades; und/oder ein aktuelles Drehmoment zumindest eines anderen Rades der mobilen Plattform; und/oder eine Normalkraft zumindest des Rades und/oder eine Normalkraft zumindest eines anderen Rades der Plattform; und/oder eine Differenz zwischen dem aktuellen Schlupf und einem Soll-Schlupf; und/oder Dynamikwerte der mobilen Plattform und/oder eine aktuelle zeitliche Änderung der Radbeschleunigung und/oder eine Normalkraft zumindest eines anderen Rades der mobilen Plattform und/oder einen aktuellen Schlupfwert und zumindest eine aktuelle Radbeschleunigung eines anderen Rades der Plattform, aufweist.

4.  Verfahren gemäß einem der vorhergehenden Ansprüche, wobei das bereitgestellte trainierte Radiale-Basisfunktionen-Netzwerk (100) eingerichtet ist, mittels der Eingangswerte (110a-d) zusätzlich eine Änderung des Motormoments als Ausgangswert (160) für die Steuerung des Drehmoments des zumindest einen Rades zu bestimmen; und das trainierte Radiale-Basisfunktionen-Netzwerk (100) zusätzlich eine Änderung des Motormoments als Ausgangswert (160) für die Steuerung des Drehmoments des zumindest einen Rades bestimmt.

5.  Verfahren zum Trainieren eines Radiale-Basisfunktionen-Netzwerks (100), zur Schätzung einer Drehmomentänderung zumindest eines Rades einer mobilen Plattform, wobei das Verfahren umfasst:

    Bereitstellen eines Schlupfwertes des Rades; und
    Bereitstellen einer zu dem Schlupfwert zugehörigen Radbeschleunigung des Rades; und
    Bereitstellen eine erste Sequenz vorheriger Werte einer Normalkraft des Rades und eine zweite Sequenz vorheriger Drehmomentwerte aufweisen;
    Bilden von Eingangswerten (110a-d) für das Radiale-Basisfunktionen-Netzwerk (100) mit dem Schlupfwert und der jeweils zugehörigen Radbeschleunigung und der ersten Sequenz vorheriger Werte einer Normalkraft des Rades und der zweiten Sequenz vorheriger Drehmomentwerte;
    Bereitstellen und Zuordnen einer zu den Eingangswerten zugehörigen Soll-Drehmomentänderung;

Trainieren des Radiale-Basisfunktionen-Netzwerks (100) mit einer Vielzahl von unterschiedlichen Eingangswerten (110a-d) und den jeweils zugeordneten Soll-Drehmomentänderung, zur Schätzung der Drehmomentänderung mittels der Eingangswerte (110a-d).

6. Verfahren gemäß Anspruch 5, wobei die bereitgestellten Eingangswerte (110a-d) für das Trainieren des Radiale-Basisfunktionen-Netzwerks (100) aus dem aktuellen Schlupfwert des Rades und der aktuellen Radbeschleunigung des Rades und einer ersten Sequenz vorheriger Werte einer Normalkraft des Rades und einer zweiten Sequenz vorheriger Drehmomentwerte bestehen.

7. Verfahren gemäß Anspruch 5 oder 6, wobei den jeweiligen Eingangswerten (110a-d) zusätzlich eine zugehörige Soll-Änderung des Motormoments zugeordnet wird; und das Radiale-Basisfunktionen-Netzwerk (100) mit einer Vielzahl von unterschiedlichen Eingangswerten (110a-d) und jeweils zugeordneten Soll-Drehmomentänderungen und zugeordneten Soll-Änderung des Motormoments trainiert wird.

8. Verfahren gemäß einem der Ansprüche 5 bis 7, wobei dem Radiale-Basisfunktionen-Netzwerk (100) zumindest ein Teil der Typen von Eingangswerten gemäß Anspruch 3 bereitgestellt wird und das Radiale-Basisfunktionen-Netzwerk (100) mit einer Vielzahl dieser Eingangswerte (110a-d) und den jeweils zugeordneten Soll-Drehmomentänderungen und/oder Soll-Änderung der Motormomente trainiert wird, die Drehmomentänderung und/oder die Änderung des Motormoments zu schätzen.

9. Verfahren gemäß einem der Ansprüche 5 bis 8, wobei das Radiale-Basisfunktionen-Netzwerk (100) basierend auf Expertenwissen und/oder physikalischen Grenzwerten vor dem Training konfiguriert wird, um ein verbessertes Training zu erreichen.

10. Verfahren gemäß Anspruch 9, wobei das Radiale-Basisfunktionen-Netzwerk (100) basierend auf Expertenwissen mittels einer Anordnung von Zentren des Radiale-Basisfunktionen-Netzwerks in einem Zustandsraum und/oder mittels einer Gewichtung einer Mehrzahl von Zentren des Radiale-Basisfunktionen-Netzwerks (100) konfiguriert wird.

11. Verwendung des Verfahrens gemäß Anspruch 1 bis 10, zur Kalibrierung eines Drehmomentreglers einer mobilen Plattform.

12. Computerprogramm, umfassend Befehle, die bei der Ausführung des Programms durch einen Computer diesen veranlassen, das Verfahren nach einem der Ansprüche 1 bis 10 auszuführen.

13. Steuervorrichtung, die eingerichtet ist, ein Verfahren nach einem der Ansprüche 1 bis 10 durchzuführen.

14. Verwendung der Steuervorrichtung gemäß Anspruch 13, zur Traktionskontrolle zumindest eines Rades der mobilen Plattform.

## Claims

1. Method for controlling a torque of at least one wheel of a mobile platform, comprising the steps of:

   providing at least one current slip value of the wheel and at least one current wheel acceleration of the wheel; and a first sequence of previous values of a normal force of the wheel and a second sequence of previous torque values as input values (110a-d);
   providing a trained radial basis function network (100) which is configured to determine, by means of the input values (110a-d), at least one torque change as an output value (160) for the control of the at least one wheel; and determining a current torque change by means of the trained radial basis function network (100) and the provided input values, for controlling the torque.

2. Method according to Claim 1, wherein the provided input values (110a-d) for the trained radial basis function network (100) comprise the current slip value of the wheel and the current wheel acceleration of the wheel and a first sequence of previous values of a normal force of the wheel and a second sequence of previous torque values, and wherein the current torque change is determined by means of a radial basis function network (100) trained with these four input value types.

3. Method according to Claim 1, wherein the input values (110a-d) comprise a current coefficient of friction of the wheel; and/or a current torque of the wheel; and/or a running mean value of the torque of the wheel; and/or a current temporal change of the torque and/or a gradient of the torque of the wheel; and/or a mean value of the torque of the wheel; and/or a current torque of at least one other wheel of the mobile platform; and/or a normal force of at least the wheel and/or a normal force of at least one other wheel of the platform; and/or a difference between the current slip and a setpoint slip; and/or dynamic values of the mobile platform and/or a current temporal change in the wheel acceleration and/or a normal force of at least one other wheel of the mobile platform and/or a current slip value and at least one current wheel acceleration of another wheel of the platform.

4. Method according to one of the preceding claims, wherein the provided trained radial basis function network (100) is configured to additionally determine a change in the engine torque as an output value (160) for controlling the torque of the at least one wheel by means of the input values (110a-d); and the trained radial basis function network (100) additionally determines a change in the engine torque as an output value (160) for controlling the torque of the at least one wheel.

5. Method for training a radial basis function network (100), for estimating a torque change of at least one wheel of a mobile platform, wherein the method comprises:

   providing a slip value of the wheel; and
   providing a wheel acceleration of the wheel associated with the slip value; and
   providing a first sequence of previous values of a normal force of the wheel and a second sequence of previous torque values;
   forming input values (110a-d) for the radial basis function network (100) with the slip value and the respectively associated wheel acceleration and the first sequence of previous values of a normal force of the wheel and the second sequence of previous torque values;
   providing and assigning a setpoint torque change associated with the input values;
   training the radial basis function network (100) with a multiplicity of different input values (110a-d) and the respectively assigned setpoint torque change, in order to estimate the torque change by means of the input values (110a-d).

6. Method according to Claim 5, wherein the provided input values (110a-d) for training the radial basis function network (100) comprise the current slip value of the wheel and the current wheel acceleration of the wheel and a first sequence of previous values of a normal force of the wheel and a second sequence of previous torque values.

7. Method according to Claim 5 or 6, wherein the respective input values (110a-d) are additionally assigned an associated setpoint change in the engine torque; and the radial basis function network (100) is trained with a multiplicity of different input values (110a-d) and respectively assigned setpoint torque changes and assigned setpoint change in the engine torque.

8. Method according to one of Claims 5 to 7, wherein at least some of the types of input values according to Claim 3 are provided to the radial basis function network (100), and the radial basis function network (100) is trained with a multiplicity of these input values (110a-d) and the respectively assigned setpoint torque changes and/or setpoint change in the engine torque, to estimate the torque change and/or the change in the engine torque.

9. Method according to one of Claims 5 to 8, wherein the radial basis function network (100) is configured to achieve improved training on the basis of expert knowledge and/or physical limit values before training.

10. Method according to Claim 9, wherein the radial basis function network (100) is configured on the basis of expert knowledge by means of an arrangement of centres of the radial basis function network in a state space and/or by means of weighting of a plurality of centres of the radial basis function network (100).

11. Use of the method according to Claims 1 to 10 for calibrating a torque controller of a mobile platform.

12. Computer program, comprising instructions which, when the program is executed by a computer, cause the said computer to carry out the method according to one of Claims 1 to 10.

13. Control apparatus which is configured to carry out a method according to one of Claims 1 to 10.

**14.** Use of the control apparatus according to Claim 13 for traction control of at least one wheel of the mobile platform.

**Revendications**

**1.** Procédé destiné à commander un couple de rotation d'au moins une roue d'une plateforme mobile, avec les étapes :

fourniture d'au moins une valeur de patinage actuelle de la roue et d'au moins une accélération de roue actuelle de la roue ; et

d'une première séquence de valeurs précédentes d'une force normale de la roue et d'une deuxième séquence de valeurs précédentes de couple de rotation en tant que valeurs d'entrée (110a - d) ;

fourniture d'un réseau de fonction de base radiale (100) entraîné, qui est mis au point pour déterminer, au moyen des valeurs d'entrée (110a-d), au moins un changement de couple de rotation en tant que valeur de sortie (160) pour la commande de l'au moins une roue ; et

détermination d'un changement de couple de rotation actuel au moyen du réseau de fonction de base radiale (100) entraîné et des valeurs d'entrée fournies pour la commande du couple de rotation.

**2.** Procédé selon la revendication 1, les valeurs d'entrée (110a - d) fournies pour le réseau de fonction de base radiale (100) étant constituées de la valeur de patinage actuelle de la roue et de l'accélération de roue actuelle et d'une première séquence de valeurs précédentes d'une force normale de la roue et d'une deuxième séquence de valeurs de couple de rotation précédentes, et le changement de couple de rotation actuel étant déterminé au moyen d'un réseau de fonction de base radiale (100) entraîné avec lesdits quatre types de valeur d'entrée.

**3.** Procédé selon la revendication 1, les valeurs d'entrée (110a-d) comportant un coefficient de friction actuel de la roue ; et/ou un couple de rotation actuel de la roue ; et/ou une valeur moyenne en cours du couple de rotation de la roue ; et/ou un changement dans le temps actuel du couple de rotation et/ou un gradient du couple de rotation de la roue ; et/ou une valeur moyenne du couple de rotation de la roue ; et/ou un couple de rotation actuel d'au moins une autre roue de la plateforme mobile ; et/ou une force normale au moins de la roue et/ou une force normale au moins d'une autre roue de la plateforme ; et/ou une différence entre le patinage actuel et un patinage théorique ; et/ou des valeurs dynamiques de la plateforme mobile et/ou un changement dans le temps actuel de l'accélération de roue et/ou une force normale d'au moins une autre roue de la plateforme mobile et/ou une valeur de patinage actuelle et au moins une accélération de roue actuelle d'une autre roue de la plateforme.

**4.** Procédé selon l'une des revendications précédentes, le réseau de fonction de base radiale (100) entraîné fourni étant mis au point pour déterminer, au moyen des valeurs d'entrée (110a - d), en supplément un changement du couple de moteur en tant que valeur de sortie (160) pour la commande du couple de rotation de l'au moins une roue ; et le réseau de fonction de base radiale (100) entraîné déterminant en supplément un changement du couple de moteur en tant que valeur de sortie (160) pour la commande du couple de rotation de l'au moins une roue.

**5.** Procédé destiné à entraîner un réseau de fonction de base radiale (100) pour estimer un changement de couple de rotation d'au moins une roue d'une plateforme mobile, le procédé comprenant :

fourniture d'une valeur de patinage de la roue ; et

fourniture d'une accélération de roue de la roue appartenant à la valeur de patinage ; et

fourniture d'une première séquence de valeurs précédentes d'une force normale de la roue et d'une deuxième séquence de valeurs précédentes de couple de rotation ;

obtention de valeurs d'entrée (110a-d) pour le réseau de fonction de base radiale (100) avec la valeur de patinage et l'accélération de roue respectivement associée et la première séquence de valeurs précédentes d'une force normale de la roue et la deuxième séquence de valeurs précédentes de couple de rotation ;

fourniture et association d'un changement de couple de rotation théorique associé aux valeurs d'entrée ;

entraînement du réseau de fonction de base radiale (100) avec une pluralité de différentes valeurs d'entrée (110a-d) et le changement de couple de rotation théorique respectivement associé pour estimer le changement de couple de rotation au moyen des valeurs d'entrée (110a - d).

**6.** Procédé selon la revendication 5, les valeurs d'entrée (110a - d) fournies pour l'entraînement du réseau de fonction de base radiale (100) étant constituées de la valeur de patinage actuelle de la roue et de l'accélération de roue actuelle de la roue et d'une première séquence de valeurs précédentes d'une force normale de la roue et d'une deuxième séquence de valeurs de couple de rotation précédentes.

**7.** Procédé selon la revendication 5 ou 6, un changement théorique associé du couple de moteur étant associé en supplément aux valeurs d'entrée (110a - d) respectives ; et le réseau de fonction de base radiale (100) étant entraîné avec une pluralité de différentes valeurs d'entrée (110a-d) et des changements de couple de rotation théoriques respectivement associés et un changement théorique associé du couple de moteur.

**8.** Procédé selon l'une des revendications 5 à 7, au moins une partie des types de valeurs d'entrée selon la revendication 3 étant fournie au réseau de fonction de base radiale (100) et le réseau de fonction de base radiale (100) étant entraîné avec une pluralité desdites valeurs d'entrée (110a - d) et des changements de couple de rotation théoriques respectivement associés et/ou du changement théorique des couples de moteur pour estimer le changement de couple de rotation et/ou le changement du couple de moteur.

**9.** Procédé selon l'une des revendications 5 à 8, le réseau de fonction de base radiale (100) étant configuré, avant l'entraînement, sur la base de connaissances d'experts et/ou de valeurs limites physiques pour atteindre un entraînement amélioré.

**10.** Procédé selon la revendication 9, le réseau de fonction de base radiale (100) étant configuré sur la base de connaissances d'experts au moyen d'un ensemble de centres du réseau de fonction de base radiale dans un espace d'état et/ou au moyen d'une pondération d'une multitude de centres du réseau de fonction de base radiale (100).

**11.** Utilisation du procédé selon la revendication 1 à 10 pour étalonner un régulateur de couple de rotation d'une plateforme mobile.

**12.** Programme informatique comprenant des instructions qui, lors de l'exécution du programme par un ordinateur, amènent ce dernier à exécuter le procédé selon l'une des revendications 1 à 10.

**13.** Dispositif de commande, qui est mis au point pour mettre en œuvre un procédé selon l'une des revendications 1 à 10.

**14.** Utilisation du dispositif de commande selon la revendication 13 pour la régulation antipatinage d'au moins une roue de la plateforme mobile.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0985586 A1
- DE 102018112718 A1
- DE 19527323 A1
- CN 103558764 A
- CN 111211724 A